(19) Europäisches Patentamt
European Patent Office
Office européen des brevets

(11) EP 3 065 249 A1

(12) EUROPEAN PATENT APPLICATION

(43) Date of publication:
07.09.2016 Bulletin 2016/36

(51) Int Cl.:
$H02J\ 3/26$ (2006.01)

(21) Application number: 15157586.7

(22) Date of filing: 04.03.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Airbus Operations GmbH
21129 Hamburg (DE)

(72) Inventors:
• TERÖRDE, Michael
21129 Hamburg (DE)
• SCHULZ, Detlef
21129 Hamburg (DE)

(74) Representative: Frenkel, Matthias Alexander
Wuesthoff & Wuesthoff
Patentanwälte PartG mbB
Schweigerstrasse 2
81541 München (DE)

(54) **Phase balancing in three-phase system**

(57) The present disclosure relates to an apparatus for phase balancing in a three-phase power distribution system provided on board a means of transport, a three-phase power distribution system comprising the apparatus, a means of transport comprising at least one of the apparatus and the three-phase power distribution system, the use of the apparatus on board a means of transport and a method for phase balancing in a three-phase power distribution system. According to a device embodiment, an apparatus (10) for phase balancing includes one or more multi-way switching devices (120, 140, 160) and a control unit (200; 122, 142, 162). Each of the one or more multi-way switching devices (120, 140, 160) is configured to selectively connect a load of one or more loads ($Z_1$, $Z_2$, $Z_3$) with the phases (A, B, C) of the three-phase power distribution system, thereby enabling a plurality of switching states between the one or more loads ($Z_1$, $Z_2$, $Z_3$) and the phases (A, B, C) of the three-phase power distribution system. The control unit (200; 122, 142, 162) includes one or more communication interfaces with the one or more multi-way switches (120, 140, 160).

Fig. 1

EP 3 065 249 A1

**Description**

The present disclosure generally relates to phase balancing. More specifically, the present disclosure relates to an apparatus for phase balancing in a three-phase power distribution system provided on board a means of transport, a three-phase power distribution system comprising the apparatus, an aircraft comprising at least one of the apparatus and the three-phase power distribution system, the use of the apparatus on board a means of transport, and a method for phase balancing in a three-phase power distribution system provided on board the aircraft.

In the field of transportation such as aviation, there is a trend towards electrification, i.e., more electrical components and systems are provided on board (or onboard) means of transport such as aircraft. For example, hydraulic and pneumatic components and systems are more and more substituted by electrical ones. This trend results, inter alia, in an increasing demand for electrical energy. As a consequence, there is a growing need for electrical generation and distribution systems for modern means of transport such as commercial aircraft. Further, there is a growing demand for reducing weight of the means of transport such as aircraft to reduce fuel consumption. For example, reducing the weight of the electrical network for distributing electrical energy on board a means of transport has a significant impact on the total energy consumption of means of transport.

Regarding aircraft, airliners often use a main bus voltage of 115V in a three-phase system to distribute electrical energy. Latest aircraft use also alternating current (AC) of 230V (often abbreviated as VAC for Volts and Alternating Current) to reduce the currents and the needed cable diameters. A symmetric three-phase system generally does not have any return current. The voltage drop over the structure is zero, which means that the only voltage drop is the one through the path from the primary electrical energy distribution to the loads. In case of asymmetry, however, the return current of the electrical three-phase AC system flows through the structure of the fuselage, which is usually made of conductive aluminum. In this case, no cables are necessary as return line in aircraft for weight-saving purposes, because the return current can flow back via the conductive aircraft structure, e.g. conductive fuselage.

When asymmetry in the three-phase system increases - for example due to different single-phase loads in a three-phase system - the return current becomes higher. This causes more electrical power losses and also increases the voltage drop. This has to be compensated through the feeders leading to further electrical power losses as well as through more weight owing to the necessary overdesign of the feeders. Further, in more aircraft the aircraft fuselage is often made of carbon-fibre-reinforced polymer (CFRP) material. CFRP material has very low electric conductivity and can be considered non-conductive. As a consequence, it is not possible to use the fuselage for the return current in case of asymmetry in the three-phase system. Aircraft having a fuselage made of CFRP material may thus require additional wiring for the return current, which, again, increase weight and energy consumption.

These considerations have led to the concept of phase balancing in three-phase power distribution systems. Phase balancing aims at the minimization or even elimination of the return current of a three-phase power distribution system. By minimizing or even eliminating the return current, no return line(s) or at least return line(s) with only minimum diameter are required on board a means of transport such as aircraft. This leads to weight reduction and thus reduced fuel consumption. Still further, use of light, but non-conductive material such as CFRP material is enabled for the structure of the means of transport such as aircraft, thereby even further reducing weight and thus fuel consumption of means of transport such as aircraft.

According to a first aspect, an apparatus for phase balancing in a three-phase power distribution system is provided. The three-phase power distribution system is provided on board a means of transport, for example on board an aircraft. The apparatus includes one or more multi-way switching devices, wherein each of the one or more multi-way switching devices and a control unit. The one or more multi-way switching devices are respectively configured to selectively connect a load of the one or more loads with the phases of the three-phase power distribution system, thereby enabling a plurality of switching states between the one or more loads and the phases of the three-phase power distribution system. The control unit includes one or more communication interfaces with the one or more multi-way switching devices. The control unit is configured to determine a current degree of imbalance of an electrical quantity on the phases of the three-phase power distribution system in a current switching state of the plurality of switching states between the one or more loads and the phases of the three-phase power distribution system. The control unit is further configured to, if the current degree of imbalance of the electrical quantity on the phases of the three-phase power distribution system exceeds a predetermined threshold, determine an adjusted degree of imbalance of the electrical quantity on the phases of the three-phase power distribution system in an adjusted switching state of the plurality of switching states between the one or more loads and the phases of the three-phase power distribution system. The control unit is further configured to instruct at least one of the one or more multi-way switching devices, via at least one of the one or more communication interfaces, to switch to the adjusted switching state of the plurality of switching states.

The term "phase" as used herein may be understood as a phase conductor or conductor in a three-phase power system. In such a system, three conductors each carry an alternating current of the same frequency and voltage relative to a common reference, but with a phase difference of one third the period. Typically, the conductors carrying the phase-shifted alternating currents are often just referred to as phases or phase conductors.

The electrical quantity on the phases of the three-phase system may be or comprise at least one of the current through the phases of the three-phase power distribution system and the voltage over the phases of the three-phase power distribution system. The one or more loads may be configured as or comprise one or more single phase loads and/or one or more three-phase loads.

By means of the one or more multi-way switching devices each of the one or more loads can be connected to and supplied by each of the three phases of the three-phase power distribution system. For example, each of the one or more multi-way switching devices may be connected, at its output side, with one of the one or more loads. Further, each of the one or more multi-way switching devices may be have, at its input side, a switch for each of the phases, i.e. by means of the switch, the respective phase may be connected to the load connected to the output side of the respective multi-way switching device. By closing one of the switches of a multi-way switching device, while maintaining the other switches in an open state, the phase of the closed switch is connected to the load connected to the output side of the respective multi-way switching device.

For example, in the current switching state, each of the one or more loads may be connected to one of the phases dependent on which switches of the one or more multi-way switching devices are opened and closed. In the adjusted switching state at least one connection between the one or more loads and the phases is changed / adjusted. For example, at least one of the one or more multi-way switching devices may connect the load at its output side with another phase of the phases.

There are several ways of computing the current and adjusted degree of imbalance or, in short, just degree of imbalance in general. The imbalance may also be referred to as asymmetry. By realizing phase balancing, a low or minimum return current can be achieved. In case of perfect balancing / perfect symmetry between all phases, there is no return current, i.e. there is a return current of zero. By means of the apparatus provided herein loads, e.g., single-phase loads, can be connected to selectively to each of the phases.

The multi-way switching devices or separate components of the apparatus may be configured to measure input voltages and/or input currents of the load(s). By that they can determine the phase shift of the loads. With the help of the measured values of the phase currents as well as the phase-to-phase voltages, there may be several ways of computing the degree of imbalance / degree of asymmetry.

For example, the control unit may be configured to determine the current degree of imbalance of the electrical quantity based on measured values of at least one of the current through the one or more loads and the voltage over the one or more loads. The measurement may be performed for each of the one or more loads.

The control unit may be configured to calculate an ideal value of the electrical quantity in an ideal state. In the ideal state the electrical quantity may be balanced on the phases of the three-phase power distribution system. The ideal state may be a theoretical construct. For example, in the ideal state, the electrical quantity may be equally balanced on all phases of the three-phase power distribution system. This state may also be referred to as state of perfect symmetry. The control unit may further be configured to determine, for each phase of the phases of the three-phase power distribution system, a difference value between a measured value of the electrical quantity and the ideal value. The control unit may further be configured to determine or set the maximum value of the difference value for each phase of the phases of the three-phase power distribution system as the current degree of imbalance of the electrical quantity on the phases of the three-phase power distribution system. The current degree of imbalance may be used to determine whether phase balancing is required.

The control unit may further be configured to determine which of the difference values for each of the phases has the maximum effective value, while having a positive real part. The control unit may be configured to determine a phase to be disconnected. The phase to be disconnected may be the phase related to the difference value that has the maximum effective value, while having a positive real part. The control unit may be configured to instruct the at least one of the one or more multi-way switching devices via the at least one of the one or more communication interface to disconnect at least one of the one or more loads from the phase to be disconnected. In response thereto, the at least one instructed multi-way switching device may disconnect the at least one of the one or more loads from the phase to be disconnected.

The control unit may be configured to determine which of the difference values for each of the phases has a negative real part. Further, the control unit may be configured to determine a phase to be connected. If only one of the difference values for each of the phases has a negative real part, the control unit may determine the phase related to the difference value that has a negative real part as the phase to be connected. The control unit may be configured to instruct the at least one of the one or more multi-way switching devices via the at least one of the one or more communication interface to connect at least one of the one or more loads to the phase to be connected. In response thereto, the at least one instructed multi-way switching device may connect the at least one of the one or more loads with the phase to be connected. By means of the above disconnection and connection procedure, the adjusted switching state may be established.

The control unit may further be configured to determine which of the difference values for each of the phases has the minimum effective value, while having a negative real part. Further, the control unit may be configured to determine a phase to be connected. For example, if two or more of the difference values for each of the phases have a negative real part, the control unit may be configured to determine the phase related to the difference value that has the minimum effective value of all phases, while having a negative real part as the phase to be connected. The control unit may be configured to instruct the at least one of the one or more multi-way switching devices via the at least one of the one or more communication interface to connect at least one of the one or more loads to the phase to be connected. By means of the above disconnection and connection procedure, the adjusted switching state may be established in case of multiple difference values having a minimum effective value.

If there are multiples phases related to a difference value that has the same minimum effective value, while having a negative real part, the control unit may be configured to determine the phase to be connected by considering which of the phases leads to a lower a return current.

The control unit may be configured to determine a reduction value between the adjusted degree of imbalance of the electrical quantity on the phases of the three-phase power distribution system and the current degree of imbalance of the electrical quantity on the phases of the three-phase power distribution system. Further, the control unit may be configured to instruct at least one of the one or more multi-way switching devices via at least one of the one or more communication interface to switch to the adjusted switching state of the plurality of switching states, if the reduction value is equal to or higher than a predetermined inaccuracy value. In response thereto, the at least one of the one or more multi-way switching devices may connect at least one of the one or more loads with another phase of the phases of the three-phase power distribution system. By connecting the at least one of the one or more loads with another phase of the phases of the three-phase power distribution system, the at least one of the one or more multi-way switching devices may switch to the adjusted switching state of the plurality of switching states, if the reduction value is equal to or higher than the predetermined inaccuracy value.

The control unit may be configured to repeatedly determine the current degree of imbalance and the adjusted degree of imbalance. For example, the control unit may be configured to periodically determine the current degree of imbalance and the adjusted degree of imbalance. The control unit may further be configured to repeatedly, e.g. periodically, instruct the at least one of the one or more multi-way switching devices via at least one of the one or more communication interface to switch to the adjusted switching state of the plurality of switching states until the adjusted degree of imbalance provides no improved imbalance than the current degree of imbalance, i.e. until the adjusted degree of imbalance provides no improvement over the current degree of imbalance. In this way, it is ensured that it is only switched to the adjusted switching state if the adjusted switching state provides an improvement of the degree of imbalance, i.e. a lower degree of imbalance / a higher symmetry than the current switching state.

The control unit may be included in at least one of the one or more multi-way switching devices and a central controller being separate from the one or more multi-way switching devices. In other words, the control unit may only be included in the respective one or more multi-way switching devices, or may only be included in the central controller, or may be distributed via both the respective one or more multi-way switching devices and the central controller. Either way, the control functions described herein may be independent of the exact location of the control unit.

The apparatus may further comprise a demultiplexing device. The demultiplexing device may be configured to prevent at least one of the one or more loads to be connected with more than one phase of the phases of the three-phase system. In other words, the demultiplexing device may ensure that each of the one or more loads is only connected to one phase at a time.

According to a second aspect, a three-phase power distribution system is provided. The three-phase power distributions system is provided on board a means of transport, for example on board an aircraft. The three-phase power distribution system comprises the apparatus as described herein and one or more three-phase power generators connected thereto. The three-phase power distribution system may be configured to perform any of the aspects described herein with respect to the apparatus according to the first aspect.

According to a third aspect, a means of transport, for example an aircraft, is provided. The means of transport, for example, the aircraft, comprises at least one of the apparatus as described herein and the three-phase power distribution system as described herein. Further, the means of transport, for example the aircraft, comprises one or more loads.

According to a fourth aspect, use of the apparatus for phase balancing in a three-phase power distribution system provided on board a means of transport, for example, on board an aircraft, is provided.

According to a fifth aspect, a method for phase balancing in a three-phase power distribution system is provided. The three-way power distribution system includes one or more multi-way switching devices and a control unit. Each of the one or more multi-way switching devices is configured for selectively connecting a load of one or more loads with the phases of the three-phase power distribution system, thereby enabling a plurality of switching states between the one or more loads and the phases of the three-phase power distribution system. The control unit includes one or more communication interfaces with the one or more multi-way switching devices. The method comprises determining, by the control unit, a current degree of imbalance of an electrical quantity on the phases of the three-phase power distribution system in a current switching state of the plurality of switching states between the one or more loads and the phases of the three-phase power distribution system. The method further comprises, if the current degree of imbalance of the electrical quantity on the phases of the three-phase power distribution system exceeds a predetermined threshold, determining, by the control unit, an adjusted degree of imbalance of the electrical quantity on the phases of the three-phase power distribution system in an adjusted switching state of the plurality of switching states between the one or more loads and the phases of the three-phase power distribution system. The method further comprises instructing, by the control unit, at least one of the one or more multi-way switching devices via at least one of the one or more communication interface to switch to the adjusted switching state of the plurality of switching states.

According to a sixth aspect, a computer program is provided. The computer program may be stored on the apparatus. For example, the computer program may be stored in the control unit or a memory unit of the control unit. The computer program comprises program code portions for causing the steps of any one of the method aspects described herein to be performed, when the computer program is run on a computer system or on one or more computing devices, e.g. the apparatus, as disclosed herein or a microprocessor, a microcontroller or a digital signal processor (DSP) of the apparatus. The computer program may be stored on a computer-readable recording medium or may be downloadable as a signal.

In general, the steps of any one of the method aspects described herein may equally be embodied in one or more suitable components, devices or units, e.g. in suitable components of the apparatus, the three-phase power distribution system, and the means of transport. Further, even if some of the above aspects are described herein with respect to apparatus or the control unit of the apparatus only, these aspects may equally be implemented in the three-phase power distribution system, the means of transport, as a method or as a computer program for performing or executing the method. All of the above described aspects may be implemented by hardware circuitry and/or by software.

In the following, the present disclosure will further be described with reference to an exemplary embodiment illustrated in the figures, in which:

Figure 1    schematically illustrates an embodiment of an apparatus for phase balancing;

Figure 2    schematically illustrates a variant of the multi-way switches used in the embodiment of figure 1;

Figure 3    schematically illustrates details of the embodiment of the apparatus of figure 1;

Figure 4    schematically illustrates details of the embodiment of the apparatus of figure 1;

Figure 5    schematically illustrates a flowchart of a method embodiment that can be performed in the embodiment of the apparatus of figure 1;

Figure 6    schematically illustrates a flowchart of a method embodiment that can be performed in the embodiment of the apparatus of figure 1; and

Figure 7    schematically illustrates a flowchart of a method embodiment that can be performed in the embodiment of the apparatus of figure 1.

In the following description, for purposes of explanation and not limitation, specific details are set forth in order to provide a thorough understanding of the present disclosure. It will be apparent to one skilled in the art that the present disclosure may be practiced in other embodiments that depart from these specific details. For example, the skilled person will appreciate that the present disclosure may be practiced with other multi-way switching devices having a different number of input terminals for receiving any number of phases of one or more lines or cables different from the specific examples discussed below to illustrate the present disclosure. Even if in the below the present disclosure is described only with respect to aircraft, the disclosure may equally be practiced with other means of transport. Further, even if in the below the present disclosure is described only with respect to a certain number of multi-way switching devices, the disclosure may equally be practiced in any other environment having a different number of multi-way switching devices. Further, although in the following it is mainly referred to single-phase loads, the principles described herein may also be applied to other loads such as three-phase loads, for example, by using one multi-way switch for each phase of a three-phase load.

Those skilled in the art will further appreciate that functions explained herein below may be implemented using individual hardware circuitry, using software functioning in conjunction with one or more processors, e.g. a programmed microprocessor or a general purpose computer, using an Application Specific Integrated Circuit (ASIC) and/or using one or more Digital Signal Processors (DSPs). It will also be appreciated that when the present disclosure is described as a method, it may also be embodied in a computer processor arrangement and a memory arrangement coupled to a processor arrangement, wherein the memory arrangement is encoded with or stores one or more programs or corresponding code to cause the processor arrangement to perform or control the methods disclosed herein when executed by the processor arrangement.

Even if in the below the present disclosure is described with respect to aircraft or to a three-phase power distribution system on board an aircraft, the present disclosure is not limited thereto but can be realized on other means of transport such as ships, trains, busses or the like. In case of realization on board of ships, a neutral line may additionally be provided, as the hull of ships can normally not be used as a return line.

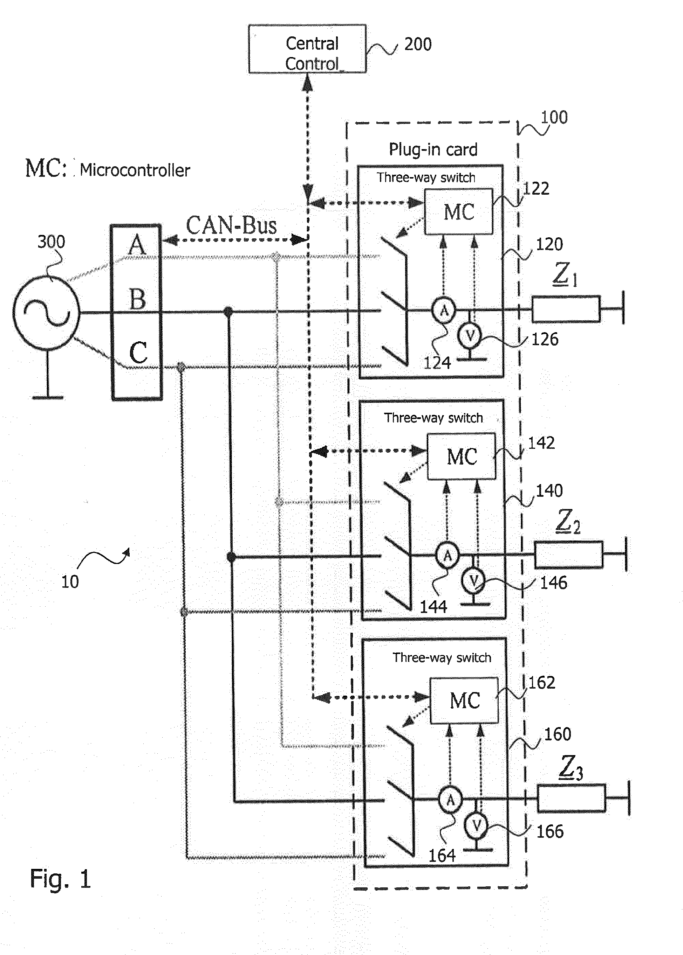

Before the embodiment of figure 1 is going to be described, some general comments regarding three-phase power supply and distribution are provided in the following.

In a balanced three-phase power supply system, three conductors each carry an alternating current of the same frequency and voltage relative to a common reference, but with a phase difference of one third the period. Typically such a reference is connected to ground and often to a current-carrying conductor called the neutral. The voltage on any conductor reaches its peak at one third of a cycle after one of the other conductors and one third of a cycle before the third conductor. From any of the three conductors, the peak voltage on the other two conductors is delayed by one third and two thirds of one cycle respectively. This phase delay gives constant power transfer over each cycle. The conductors carrying the phase-shifted alternating current are often just referred to as phases. Usually, the three phases are respectively shifted by 120°.

With a perfectly balanced three-phase supply the instantaneous voltage of any phase is exactly equal in magnitude but opposite to the sum of the other two phases. This means that if the load on the three phases is balanced as well, the return path for the current in any phase conductor is the other two phase conductors. Hence, in a balanced three-phase system, the sum of the currents in the three conductors is always zero and the current in each conductor is equal to and in the opposite direction as the sum of the currents in the other two. Thus, each conductor may act as the return path for the currents from the other two. Three-phase systems may also utilize a fourth wire, for example in low-voltage distribution. This fourth wire is the neutral wire. The neutral wire (or, in short, just neutral) allows three separate single-phase supplies to be provided at a constant voltage and is commonly used for supplying groups of domestic properties which are each single-phase loads. The connections are arranged so that, as far as possible in each group, equal power is drawn from each phase. Balanced three-phase supplies are desirable as the phase currents tend to cancel out one another, summing to zero in the case of a linear balanced load. This makes it possible to reduce the size of the neutral conductor because it carries little or no current. With a balanced load, all the phase conductors carry the same current and so can be the same size.

Figure 1 schematically illustrates an embodiment of an apparatus 10 for phase balancing. By way of example, the apparatus 10 comprises three multi-way switches 120, 140, 160, wherein each of the multi-way switches 120, 140, 160 may function as a multi-way switching device described above. Although three multi-way switches 120, 140, 160 are exemplarily included in the apparatus 10 for sake of explanation rather than limitation, the apparatus 10 may include any number of multi-way switches 120, 140, 160. The multi-way switches 120, 140, 160 of figure 1 are, by way of example, provided on one common plug-in card 100. However, this is also purely exemplary and the multi-way switches 120, 140, 160 may be provided separately. Each of the three multi-way switches 120, 140, 160 includes a microcontroller 122, 142, 162 to generate control instructions for controlling the respective multi-way switches 120, 140, 160. Alternatively or additionally, each of the multi-way switches 120, 140, 160 can be controlled by control instructions generation by a central controller 200. Further, each of the three multi-way switches 120, 140, 160 has, by way of example, three switches to illustrate that each of the multi-way switches 120, 140, 160 may have a plurality of switches that can be selectively switched independently from each other in response to respective control instructions received from at least one of the respective microcontroller 122, 142, 162 and the central controller 200. In accordance with this example of three switches per multi-way switch, the multi-way switches 120, 140, 160 may also be referred to as three-way switches. The control instructions may be communicated directly from the microcontrollers 122, 142, 162 to the switches of the multi-way switches 120, 140, 160 and/or directly from the central controller 100 via Control Area Network (CAN) bus to the multi-way switches 120, 140, 160 and/or indirectly from the central controller 100 via the CAN bus and microcontrollers 122, 142, 162 to the multi-way switches 120, 140, 160. For example, in normal operation, the central controller may control the multi-way switches 120, 140, 160. In case of malfunction or breakdown of the central controller 200, the microcontrollers 122, 142, 162 may take over the control of the multi-way switches 120, 140, 160.

Further, each multi-way switch 120, 140, 160 comprises a current sensor 124, 144, 164 for measuring the current through the respective loads $Z_1$, $Z_2$, $Z_3$ and a voltage sensor 126, 146, 166 for measuring the voltage over the respective loads $Z_1$, $Z_2$, $Z_3$. Still further, a three-phase generator 300 is shown in figure 1 that generates three-phase power that is distributed via three phases A, B, C. Three-phase systems for power supply and distribution are generally known to the skilled person so that a detailed explanation thereof is omitted for sake of brevity.

As can be seen from figure 1, for each connection from the power generator 300 to the loads $Z_1$, $Z_2$, $Z_3$ a three-way switch 120, 140, 160 is provided. For example, the central controller 200 may monitor the currents and/or voltages as measured by current sensors and voltage sensors, respectively. Based on the monitored currents and/or voltages the central controller 200 may send control instructions to the three-way switches 120, 140, 160 to balance the phases A, B, C of the three-phase power distribution system. Generally, the central controller 200 and/or the microcontrollers 122, 142, 162 can limit the speed of switching the switches to the different phases A, B, C to a speed that prevents short circuits to be caused. Although not shown in Figure 1, the switching devices 122, 142, 162 may be connected in series to one or more additional fuse elements.

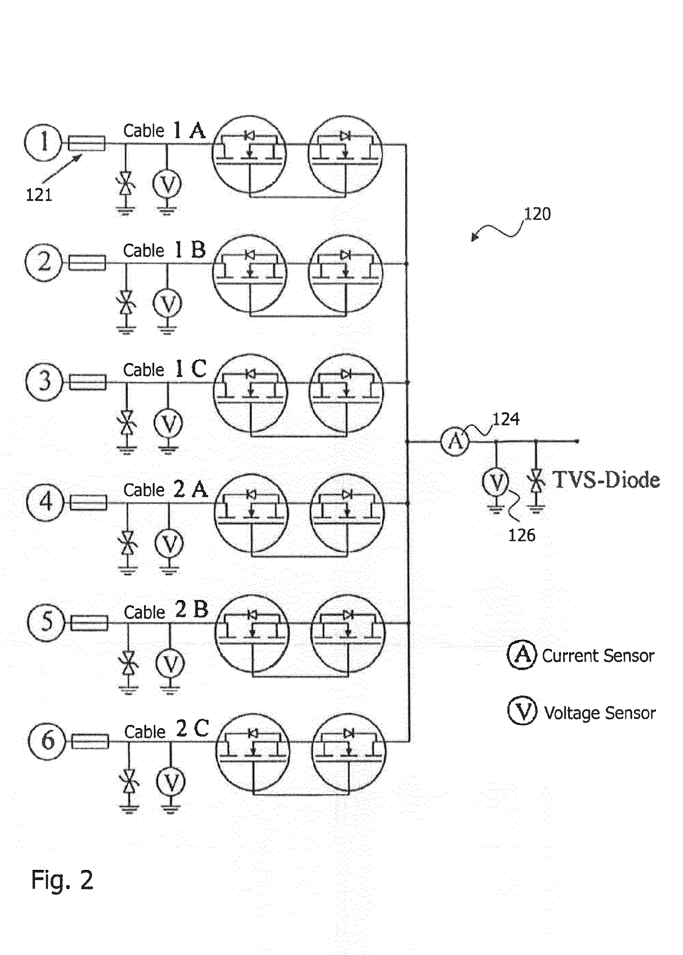

Figure 2 schematically illustrates a variant of the multi-way switches 120, 140, 160 of figure 1. According to this variant, a multi-way switch 120 is provided that is configured as a six-way switch to illustrate that the multi-way switches can receive any plural number of inputs. As the multi-way switch of figure 2 comprises, by way of example, six input terminals for receiving six inputs, the multi-way switch 120 of figure 2 can be connected to two three-phase cables or wires, i.e. six phase conductors in total. As a consequence, the multi-way switch of figure 2 can selectively connect a load (not shown in figure 2) with each of the six phases of the two three-phase cables or wires.

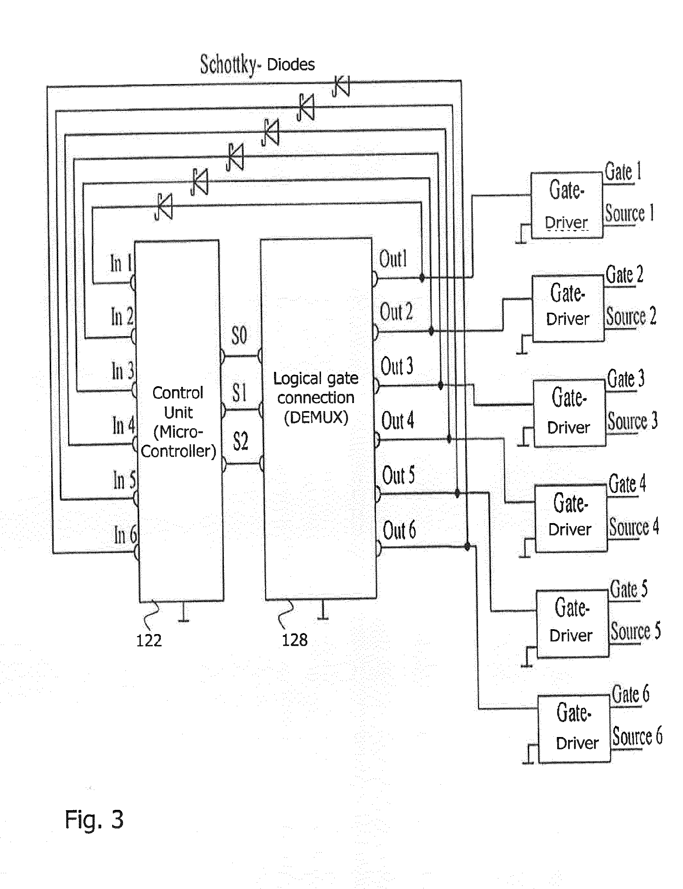

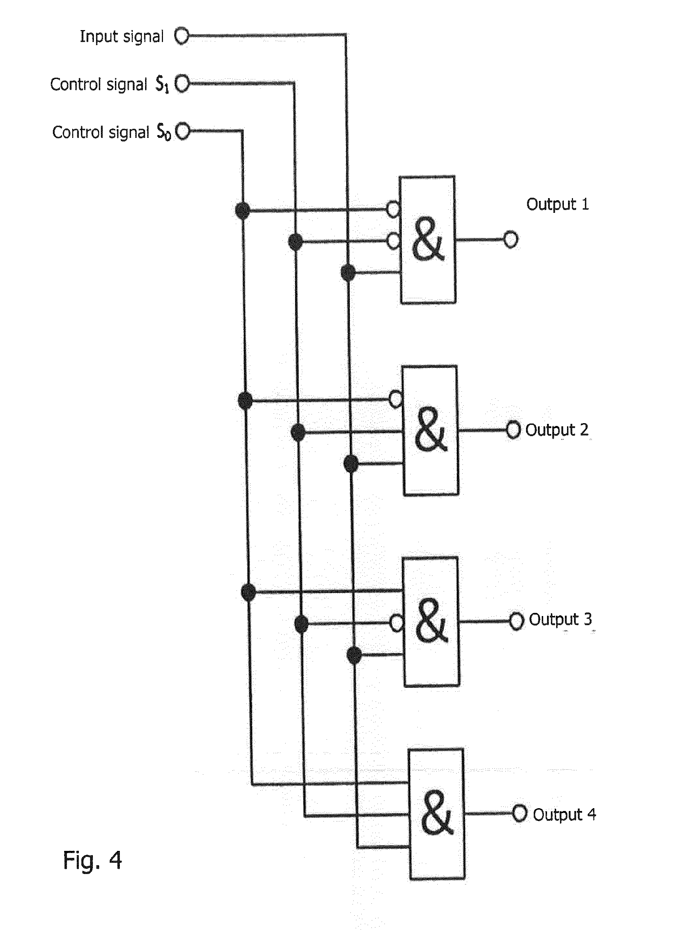

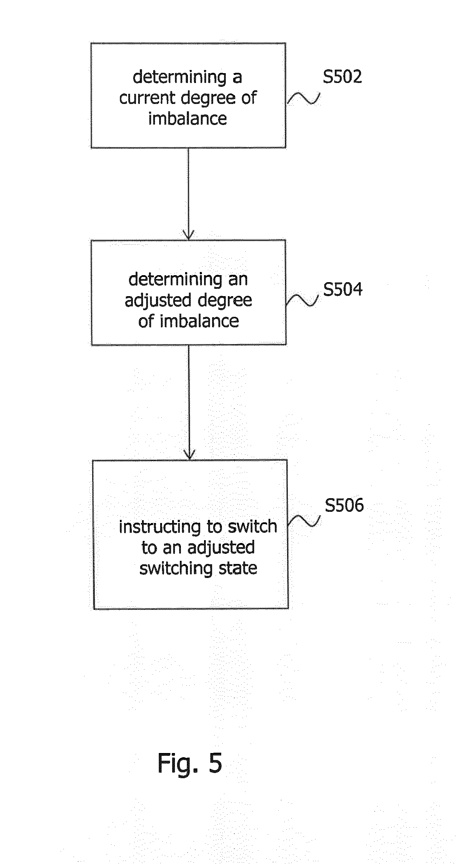

Specifics of the operation of the apparatus of figure 1 in order to determine a degree of imbalance in a three-phase power distribution system and/or to balance the phases of the three-phase power distribution system will be described below with respect to figures 5 to 7. Before these specifics are explained, some details regarding possible realizations of the apparatus 10 are explained with respect to figures 3 and 4.

Independent of the exact realization of the multi-way switches 120, 140, 160 of the apparatus 10 a logic may be provided in the apparatus 10, e.g. in the multi-way switches 120, 140, 160, preventing that more than one output signal is provided to the load.

Figure 3 shows a realization of a triggering unit for triggering gates of a multi-way switch such as multi-way switches 120, 140, 160. The multi-way switch may be a three-way switch as exemplarily shown in figure 3 or a six-way switch as exemplarily shown in figure 2 or any other kind of multi-way switch. Any multi-way switch has a plural number of inputs (input terminals) and one single output (output terminal) for connection to a single-phase load. If more than one output is activated at a time, this may lead to short circuits. To prevent such short circuits by ensuring that there is only one single connection of a phase to a single-phase load, a logical gate connection functioning as a demultiplexer (DEMUX) is provided in the triggering unit of figure 3. In the following, it is assumed for explanation rather than limitation that the DEMUX 128 is provided between the microcontroller 122 (serving as a control unit) of multi-way switch 120 and the gate drivers of the multi-way switch 120.

DEMUX 128 serves the multi-way switch 120 as an additional fuse element. DEMUX 128 prevents, by means of hardware rather than pure software, that two or more phases entering the multi-way switch are connected to the same load. For this purpose, DEMUX 128 receives control inputs S0, S1, S2. The control inputs S0, S1, S2 include the address of the phase to be connected to the load. At its output, DEMUX 128 is connected to signal lines to the various gate drivers. In accordance with the received control input S0, S1, S2, DEMUX 128 instructs the gate drivers to connect to the load or not. In addition, the outputs can be lead back to the inputs of the microcontroller 122. If two or more outputs are activated by DEMUX 128 because of malfunction or the like, the activation of the two or more outputs can be detected by microcontroller 122. In response to this detection, microcontroller 122 may set the input signal of DEMUX to zero, e.g. to 0V. In this way, a mutual supervision of the microcontroller 122 and DEMUX 128 is provided. Therefore, not more than one gate can be trigger at a time, e.g. not more than one output can be set to high level, thereby prevent short circuits. For example, microcontroller 122 can detected malfunction of DEMUX 128 or any other improper behavior. Further, the Schottky diodes prevent direct triggering of the date drivers by the microcontroller 122. This is because the Schottky diodes only allow signals from the DEMUX 128 to the microcontroller 122 to pass but not vice versa. The general structure of DEMUX 128 is shown in figure 4 by means of a DEMUX for triggering a four-way switch.

In figure 5, an embodiment of a method for phase balancing in a three-phase power distribution system is shown. The method can be used, for example, in the apparatus 10 of figure 1 in combination with or without any of the specific details described above with respect to figures 2 to 4, but also in other three-phase power distribution systems. As can be seen from figure 1, the apparatus 10 includes three three-way switches as a specific example of one or more multi-way switches. Each of the three-way switches 120, 140, 160 is configured to selectively connect an associated load $Z_1$, $Z_2$, $Z_3$ with the phases A, B, C of the three-phase power distribution system, thereby enabling a plurality of switching states between the loads $Z_1$, $Z_2$, $Z_3$ and the phases A, B, C of the three-phase power distribution system. The three-phase power distribution system further includes a central controller 200 including one or more communication interfaces to the three three-way switches 120, 140, 160 via a CAN bus.

In step S502, the central controller 200 determines a current degree of imbalance of an electrical quantity on the phases A, B, C of the three-phase power distribution system in a current switching state of the plurality of switching states between the loads $Z_1$, $Z_2$, $Z_3$ and the phases A, B, C of the three-phase power distribution system. The electrical quantity may the current as measured by current sensors 124, 144, 164 and/or the voltage as measured by voltage sensor 126, 146, 166. if the current degree of imbalance of the electrical quantity on the phases A, B, C of the three-phase power distribution system exceeds a predetermined threshold, the central controller 200 determines, in step S504, an adjusted degree of imbalance of the electrical quantity on the phases A, B, C of the three-phase power distribution system in an adjusted switching state of the plurality of switching states between the loads $Z_1$, $Z_2$, $Z_3$ and the phases A, B, C of the three-phase power distribution system. The adjusted degree of imbalance may be calculated by the central controller 200. The adjusted switching state is different from the current switching state. In step S506, the central controller 200 instructs at least one of the three three-way switches 120, 140, 160 via at least one of the one or more communication interfaces over the CAN bus to switch to the adjusted switching state of the plurality of switching states. For example, the central controller may instruct at least one of the three three-way switches 120, 140, 160 via at least one of the one or more communication interfaces over the CAN bus to connect at least one of the loads $Z_1$, $Z_2$, $Z_3$ with another phase of the phases A, B, C of the three-phase power distribution system.

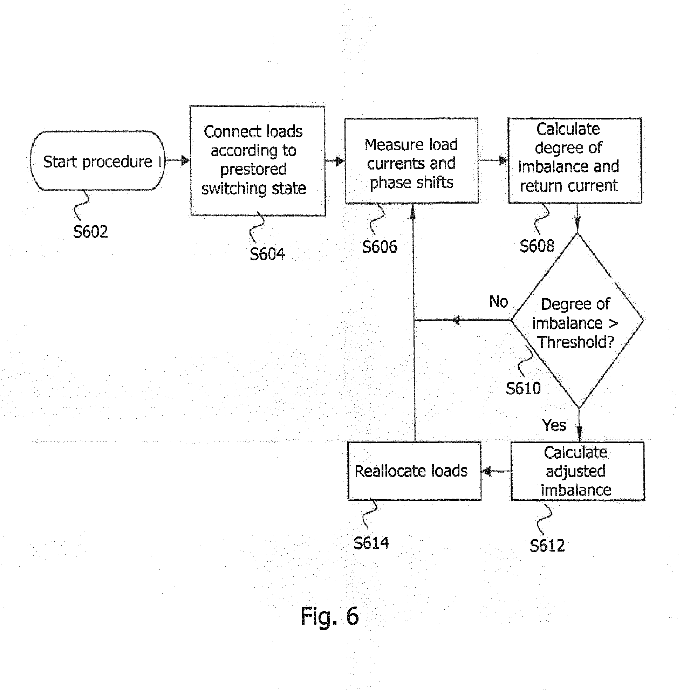

More details of the method embodiment of figure 5 are shown in and explained with respect to figure 6. In step S602, the procedure is started, e.g., because an aircraft starts its operation. Then, in step S604 the loads $Z_1$, $Z_2$, $Z_3$ are connected with the phases A, B, C according to a prestored switching state. In step S606, the load currents, as an example of an electrical quantity, and optionally the phase shifts on the conductors through the loads $Z_1$, $Z_2$, $Z_3$ are measured. As explained above, in case of perfect symmetry, i.e., no imbalance on the phases, there is no return current. From the measured values of the load currents and optionally the phase shifts, the central controller 200 calculates, in step S608, a current degree of imbalance and a return current as a measure of the asymmetry in the power distribution system. It is then determined in step S610, whether the calculated degree of imbalance exceeds a predetermined threshold. If not, the load currents and optionally the phase shifts on the conductors through the loads $Z_1$, $Z_2$, $Z_3$ are measured again in step S606. If, however, query S610 is answered in the affirmative, the degree of imbalance is considered too high. In this case, central controller 200 calculates an adjusted degree of imbalance in step S612 and calculates an adjusted switching state to achieve the adjusted degree of imbalance. In step S614, the loads are reallocated to the phases A, B, C in accordance with the calculated adjusted switching state that achieves the adjusted degree of imbalance. Then, the adjusted degree of imbalance is considered the current degree of imbalance and the steps S606 to S614 are repeated.

The method as described above 6 makes us of current values (currently measured values) and functions deterministically. As a consequence, a fast reduction of the degree of imbalance in real-time is possible. Thus, the method can intervene before activation of fuse elements.

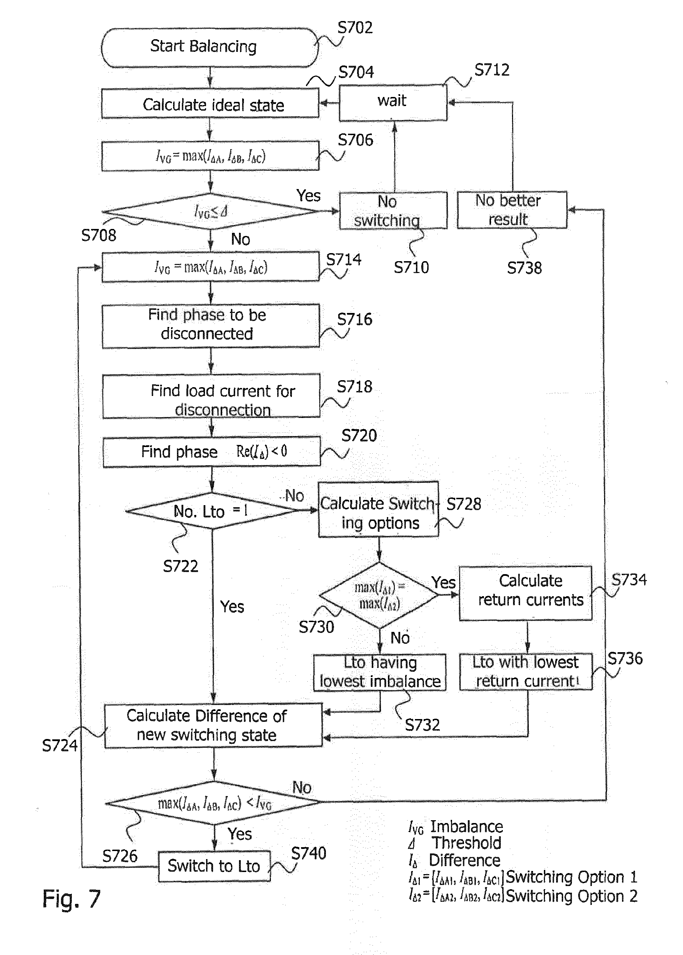

Before even more possible details of the method for phase balancing are described with respect to figure 7, some mathematical background and background on three-phase power distribution systems is provided below.

The method and apparatus for phase balancing as disclosed herein may provide the lowest possible degree of imbalance, i.e., the highest possible symmetry, with the fewest switching procedures as possible. In the following, underlined symbols refer to phasors of complex numbers.

In general, it is assumed that all load currents $\underline{I}_L$ have a positive real part in accordance with:

$$\underline{I}_L \in \mathbb{C} \text{ with } \mathrm{Re}(\underline{I}_L) > 0$$

In accordance therewith, the real part of a differential phasor of a line current can only be reduced if a load is disconnected. In other words, if a load is connected to a phase, the real part of a differential phasor related to this phase is usually increased.

In the following, some mathematical details are explained for sake of explanation rather than limitation with respect to switching between single-phase loads and three phases of a single cable and single feeder three-phase power distribution system. However, the principles described below can be equally applied also to more than one cable and more than one feeder, e.g. to any plurality of lines and feeders. Three-phase systems can be described by means of symmetrical components that are commonly referred to as direct (or positive), inverse (or negative) and zero (or homopolar). In order to enable dynamic load reallocation in real-time, the ideal symmetrical state of the three-phase power distribution system is described as the direct component $\underline{I}_{1A}$ of phase A. The ideal state is, for example, determined for the whole three-phase system or cable comprising the three phases. The direct component can mathematically be described as

$$\underline{I}_{1A} = \frac{1}{3} * \left( \underline{I}_A + \underline{a} * \underline{I}_B + \underline{a}^2 * \underline{I}_C \right) = \frac{1}{3} \sum_{i=1}^{n} \underline{I}_{Li}$$

with complex rotational vectors $\underline{a} = e^{j120°}$ and $\underline{a}^2 = e^{j240°}$ and n loads.

The difference between the load currents and the direct component results in differential phasors $\underline{I}_{\Delta A}$, $\underline{I}_{\Delta B}$ and $\underline{I}_{\Delta C}$ in accordance with

$$\underline{I}_{\Delta A} = \underline{I}_A - \underline{I}_{1A}$$

$$\underline{I}_{\Delta B} = \underline{I}_B * \underline{a} - \underline{I}_{1A}$$

$$\underline{I}_{\Delta C} = \underline{I}_C * \underline{a}^2 - \underline{I}_{1A}$$

$$\underline{I}_{\Delta A} + \underline{I}_{\Delta B} + \underline{I}_{\Delta C} = 0$$

where $\underline{I}_B$ is shifted by 120° and $\underline{I}_C$ is shifted by 240°.

Phase balancing starts in step S702. Then, in step S704, an ideal state of the three-phase power distribution system in which there is ideal symmetry / perfect balance is determined. For example, direct component $\underline{I}_{1A}$ may be used as the ideal state. In step S706, the maximum effective value of the differential phasors $\underline{I}_{\Delta A}$, $\underline{I}_{\Delta B}$ and $\underline{I}_{\Delta C}$ is used as the current degree of imbalance $I_{VG}$:

$$I_{VG} = \max\left(\underline{I}_{\Delta A}, \underline{I}_{\Delta B}, \underline{I}_{\Delta C}\right)$$

If herein it is stated that a complex value is compared with a value or two or more complex values are compared with each other, this refers to the respective effective value of the complex values, e.g., an effective value of a complex value can be compared with a value or two or more effective values of two or more complex values can be compared with each other, respectively.

In step S708 it is determined whether the current degree of imbalance $I_{VG}$ is equal to or lower than a predetermined threshold. If the current degree of imbalance $I_{VG}$ is equal to or lower than the predetermined threshold it is concluded that the current degree of imbalance $I_{VG}$ is acceptable and no switching is performed in step S710. As a consequence the apparatus 10 waits in step S712 and then starts at step S704 again.

If, however, the current degree of imbalance $I_{VG}$ exceeds the predetermined threshold, appropriate measures for reducing the degree of imbalance $I_{VG}$ in real-time are taken starting at step S714. For the value of $I_{VG}$ set in step S714 a phase to be disconnected is searched in step S716 and a load current to be disconnected is searched in step S718. In more detail, a load related to the identified load current to be disconnected is identified to be disconnected from the identified phase. In other words, for the identified phase, a load is searched that provides the highest effective value and positive real part of the differential phasor. In this way, a load - phase connection is identified that causes the biggest difference to the direct component. According to the equations relating to the differential phasors $\underline{I}_{\Delta A}$, $\underline{I}_{\Delta B}$ and $\underline{I}_{\Delta C}$ above, there is either one single differential phasor or there are two differential phasors having a positive real part. If there is only one differential phasor having a positive real part, the corresponding phase is identified as the phase to be disconnected. If there are two differential phasors having a positive real part, the phase is identified as the phase to be disconnected, the corresponding differential phasor of which has the higher effective value. In this way, the higher disturbance of the perfect symmetry may be disconnected. The higher effective value implies that the complex phasor representation of the differential phasor with the higher effective value is longer. In step S718 a load current is searched for the phase identified in step S716, the phasor representation of which is most similar to the differential phasor of the phase identified in step S716. In complex representation, a phasor of a load / load current may be selected that is closest to the tip/end of the complex differential phasor and is unequal to zero. In this comparison, not only the length of the phasors is considered but also the phase shift because, leaving out the phase shift, may increase the imbalance of the system.

In other words, a load is searched for a phase, the phasor representation of which is closest to the differential phasor in complex representation. For example, a load can be chosen that is closest to the tip/end of the complex differential phasor and is unequal to zero. In step S720 it is identified to which phase the identified load is to be switched to. For this purpose, a phase is identified, the differential phasor of which has a negative real part. By identifying the load to be newly connected to the phase related to a differential phasor with a negative real part, the current of the respective phasor becomes, after performing the appropriate switching action, more equal to the direct component. To sum up steps S716, S718 and S720, a phase to be disconnected is identified, a load to be disconnected is identified and a phase to be switched to is identified. Before performing the switching, however, it is determined in step S722 whether there are more phases related to a differential phasor with negative real part. If there is only one phase related to a differential phasor with negative real part, this phase is, in principle, selected to be connected to the identified phase. In step S724 the new differential phasors $\underline{I}_{\Delta A}$, $\underline{I}_{\Delta B}$ and $\underline{I}_{\Delta C}$ are calculated and the new degree of imbalance $I_{VG}$ is determined based on the new differential phasors $\underline{I}_{\Delta A}$, $\underline{I}_{\Delta B}$ and $\underline{I}_{\Delta C}$ in step S726.

If, however, the answer to query S722 is negative, i.e. there are more than one phases related to differential phasors with negative real part, the effective values of the differential phasors for both switching options for each of the phases related to a differential phasor having negative real part are calculated in step S728. The two effective values of the differential phasors of both switching options are compared to each other in step S730. If one of the two effective values of the differential phasors of both switching options is lower, the respective phase is identified as the phase to be switched to in step S732. If, however, the effective value of the differential phasors match, the resulting return current for both switching options is calculated in step S734. The switching option with the lower return current is used as the option to be switched to. In this way, the phase shift of 120° is considered. In step S724 the new differential phasors $\underline{I}_{\Delta A}$, $\underline{I}_{\Delta B}$ and $\underline{I}_{\Delta C}$ are calculated and the new degree of imbalance $I_{VG}$ is determined based on the new differential phasors $\underline{I}_{\Delta A}$, $\underline{I}_{\Delta B}$ and $\underline{I}_{\Delta C}$ in step S726.

Before performing the appropriate switching to connect the identified load with the identified phase it is determined in step S726 whether the newly calculated degree of imbalance is lower than the current degree of imbalance $I_{VG}$ as identified and set in steps S706 and S714, respectively. Only if the newly calculated degree of imbalance is lower than the current degree of imbalance $I_{VG}$, the switching operation with the identified load and phase is performed in step S740. If it is determined that the current degree of imbalance $I_{VG}$ is equal to or lower than the newly calculated imbalance, no switching is performed. In this way, it is ensured that after the algorithm of figure 7 the new degree of imbalance will never be worse than the current degree of imbalance $I_{VG}$. Only if an improvement in symmetry is achieved, switching is performed. The method of figures 7 can be performed until no further improvement of symmetry is achieved in a predetermined time period. As the algorithm does not terminate when the degree of imbalance is lower $I_{VG}$ than the predetermined threshold, but when no further improvement is achieved, a robust and deterministic algorithm is provided for achieving a minimum degree of imbalance with the minimum number of switching operations.

In an additional optional step (not shown in figure 7), it is not only determined in step S726 whether the newly calculated degree of imbalance is lower than the current degree of imbalance but whether the difference between the (lower) newly calculated degree of imbalance and the current degree of imbalance $I_{VG}$, i.e., the reduction of the imbalance, is equal to or higher than an error of measurement, e.g. 100mA.

## Claims

1. Apparatus (10) for phase balancing in a three-phase power distribution system provided on board a means of transport, for example on board an aircraft, the apparatus (10) including:

    - one or more multi-way switching devices (120, 140, 160), wherein each of the one or more multi-way switching devices (120, 140, 160) is configured to selectively connect a load of one or more loads ($Z_1$, $Z_2$, $Z_3$) with the phases (A, B, C) of the three-phase power distribution system, thereby enabling a plurality of switching states between the one or more loads ($Z_1$, $Z_2$, $Z_3$) and the phases (A, B, C) of the three-phase power distribution system; and
    - a control unit (200; 122, 142, 162) including one or more communication interfaces with the one or more multi-way switching devices (120, 140, 160), wherein the control unit (200; 122, 142, 162) is configured to:

        - determine a current degree of imbalance of an electrical quantity on the phases (A, B, C) of the three-phase power distribution system in a current switching state of the plurality of switching states between the one or more loads ($Z_1$, $Z_2$, $Z_3$) and the phases (A, B, C) of the three-phase power distribution system;
        - if the current degree of imbalance exceeds a predetermined threshold, determine an adjusted degree of imbalance of the electrical quantity on the phases (A, B, C) of the three-phase system in an adjusted switching state of the plurality of switching states between the one or more loads ($Z_1$, $Z_2$, $Z_3$) and the phases of the three-phase power distribution system (A, B, C); and
        - instruct at least one of the one or more multi-way switching devices (120, 140, 160) via at least one of the one or more communication interfaces to switch to the adjusted switching state of the plurality of switching states.

2. The apparatus (10) of claim 1, wherein the control unit (200; 122, 142, 162) is configured to determine the current degree of imbalance of the electrical quantity based on measured values of at least one of the current through the one or more loads ($Z_1$, $Z_2$, $Z_3$) and the voltage over the one or more loads ($Z_1$, $Z_2$, $Z_3$).

3. The apparatus (10) of claim 1 or 2, wherein the control unit (200; 122, 142, 162) is configured to:

    - calculate an ideal value of the electrical quantity in an ideal state in which the electrical quantity is balanced on the phases (A, B, C) of the three-phase power distribution system;
    - determine, for each phase of the phases (A, B, C) of the three-phase power distribution system, a difference value between a measured value of the electrical quantity and the ideal value; and

- determine the maximum value of the difference value for each phase of the phases (A, B, C) of the three-phase power distribution system as the current degree of imbalance of the electrical quantity on the phases (A, B, C) of the three-phase power distribution system.

4. The apparatus (10) of claim 3, wherein the control unit (200; 122, 142, 162) is configured to:

- determine which of the difference values for each of the phases (A, B, C) has a maximum effective value, while having a positive real part;
- determine a phase to be disconnected, wherein the phase to be disconnected is the phase related to the difference value that has a maximum effective value, while having a positive real part; and
- instruct at least one of the one or more multi-way switching devices (120, 140, 160) via at least one of the one or more communication interfaces to disconnect at least one of the one or more loads ($Z_1$, $Z_2$, $Z_3$) from the phase to be disconnected.

5. The apparatus (10) of claim 3 or 4, wherein the control unit (200; 122, 142, 162) is configured to:

- determine which of the difference values for each of the phases (A, B, C) has a negative real part;
- determine a phase to be connected, wherein the phase to be connected is the phase related to the difference value that has a negative real part; and
- instruct at least one of the one or more multi-way switching devices (120, 140, 160) via at least one of the one or more communication interfaces to connect at least one of the one or more loads ($Z_1$, $Z_2$, $Z_3$) to the phase to be connected.

6. The apparatus (10) of claim 3 or 4, wherein the control unit (200; 122, 142, 162) is configured to:

- determine which of the difference values for each of the phases (A, B, C) has a minimum effective value, while having a negative real part;
- determine a phase to be connected, wherein the phase to be connected is the phase related to the difference value that has a minimum effective value, while having a negative real part; and
- instruct at least one of the one or more multi-way switching devices (120, 140, 160) via at least one of the one or more communication interfaces to connect at least one of the one or more load ($Z_1$, $Z_2$, $Z_3$) to the phase to be connected.

7. The apparatus (10) of claim 6, wherein the control unit (200; 122, 142, 162) is configured to determine the phase to be connected by considering which of the phases (A, B, C) leads to a lower a return current, if there are two or more phases related to a difference value that has the same minimum effective value, while having a negative real part.

8. The apparatus (10) of any one of claims 1 to 7, wherein the control unit (200; 122, 142, 162) is configured to:

- determine a reduction value between the adjusted degree of imbalance of the electrical quantity on the phases (A, B, C) of the three-phase power distribution system and the current degree of imbalance of the electrical quantity on the phases (A, B, C) of the three-phase power distribution system; and
- instruct at least one of the one or more multi-way switching devices (120, 140, 160) via at least one of the one or more communication interfaces to switch to the adjusted switching state of the plurality of switching states, if the reduction value is equal to or higher than a predetermined inaccuracy value.

9. The apparatus (10) of any one of claims 1 to 8, wherein the control unit (200; 122, 142, 162) is configured to:

- repeatedly determine the current degree of imbalance and the adjusted degree of imbalance; and
- repeatedly instruct at least one of the one or more multi-way switching devices (120, 140, 160) via at least one of the one or more communication interfaces to switch to the adjusted switching state of the plurality of switching states until the adjusted degree of imbalance provides no improved imbalance than the current degree of imbalance.

10. The apparatus (10) of any one of claims 1 to 9, wherein the control unit (200; 122, 142, 162) is contained in at least one of:

- the one or more multi-way switching devices (120, 140, 160); and
- a central controller (200) being separate from the one or more multi-way switching devices (120, 140, 160).

11. The apparatus (10) of any one of claims 1 to 10, wherein the apparatus (100) comprises a demultiplexing device (128) that is configured to prevent at least one of the one or more loads ($Z_1$, $Z_2$, $Z_3$) to be connected with more than one phase of the phases (A, B, C) of the three-phase power distribution system.

12. A three-phase power distribution system provided on board a means of transport, for example on board an aircraft, the three-phase power distribution system comprising the apparatus (10) of any one of claims 1 to 11 and a three-phase power generator (300).

13. A means of transport, for example an aircraft, comprising at least one of:

   - the apparatus (10) of any one of claims 1 to 11 and one or more loads ($Z_1$, $Z_2$, $Z_3$); and
   - the three-phase power distribution system of claim 12 and one or more loads ($Z_1$, $Z_2$, $Z_3$).

14. Use of the apparatus (10) of any one of claims 1 to 11 for phase balancing in a three-phase power distribution system provided on board a means of transport, for example on board an aircraft.

15. A method for phase balancing in a three-phase power distribution system provided on board a means of transport, for example on board an aircraft, the three-way power distribution system including one or more multi-way switching devices (120, 140, 160), wherein each of the one or more multi-way switching devices (120, 140, 160) is configured for selectively connecting a load of one or more loads ($Z_1$, $Z_2$, $Z_3$) with the phases (A, B, C) of the three-phase power distribution system, thereby enabling a plurality of switching states between the one or more loads ($Z_1$, $Z_2$, $Z_3$) and the phases (A, B, C) of the three-phase power distribution system, the three-way power distribution system further including a control unit (200; 122, 142, 162) including one or more communication interfaces to the one or more multi-way switching devices (120, 140, 160), wherein the method comprises:

   - determining (S502), by the control unit (200; 122, 142, 162), a current degree of imbalance of an electrical quantity on the phases (A, B, C) of the three-phase power distribution system in a current switching state of the plurality of switching states between the one or more loads ($Z_1$, $Z_2$, $Z_3$) and the phases (A, B, C) of the three-phase power distribution system;
   - if the current degree of imbalance exceeds a predetermined threshold, determining (S504), by the control unit (200; 122, 142, 162), an adjusted degree of imbalance of the electrical quantity on the phases (A, B, C) of the three-phase power distribution system in an adjusted switching state of the plurality of switching states between the one or more loads ($Z_1$, $Z_2$, $Z_3$) and the phases (A, B, C) of the three-phase power distribution system; and
   - instructing (S506), by the control unit (200; 122, 142, 162), at least one of the one or more multi-way switching devices (120, 140, 160) via at least one of the one or more communication interfaces to switch to the adjusted switching state of the plurality of switching states.

Fig. 1

Fig. 2

Fig. 3

Input signal ○

Control signal $S_1$ ○

Control signal $S_0$ ○

Output 1

Output 2

Output 3

Output 4

Fig. 4

determining a
current degree of
imbalance                    S502

determining an
adjusted degree
of imbalance                 S504

instructing to switch
to an adjusted
switching state              S506

Fig. 5

Start procedure

S602

Connect loads according to prestored switching state

S604

Measure load currents and phase shifts

S606

Calculate degree of imbalance and return current

S608

Degree of imbalance > Threshold?

S610

No

Yes

Reallocate loads

S614

Calculate adjusted imbalance

S612

Fig. 6

Fig. 7

Start Balancing — S702

Calculate ideal state — S704

$I_{VG} = \max(I_{\Delta A}, I_{\Delta B}, I_{\Delta C})$ — S706

$I_{VG} \leq \Delta$ — S708

wait — S712

No switching — S710

No better result — S738

Yes

No

$I_{VG} = \max(I_{\Delta A}, I_{\Delta B}, I_{\Delta C})$ — S714

Find phase to be disconnected — S716

Find load current for disconnection — S718

Find phase $\mathrm{Re}(I_\Delta) < 0$ — S720

No. Lto = 1 — S722

Calculate Switching options — S728

$\max(I_{\Delta 1}) = \max(I_{\Delta 2})$ — S730

Calculate return currents — S734

Lto having lowest imbalance — S732

Lto with lowest return current — S736

Calculate Difference of new switching state — S724

$\max(I_{\Delta A}, I_{\Delta B}, I_{\Delta C}) < I_{VG}$ — S726

Switch to Lto — S740

No

Yes

Yes

No

Yes

$I_{VG}$ Imbalance
$\Delta$ Threshold
$I_\Delta$ Difference
$I_{\Delta 1} = [I_{\Delta A1}, I_{\Delta B1}, I_{\Delta C1}]$ Switching Option 1
$I_{\Delta 2} = [I_{\Delta A2}, I_{\Delta B2}, I_{\Delta C2}]$ Switching Option 2

Europäisches
Patentamt

European
Patent Office

Office européen
des brevets

# EUROPEAN SEARCH REPORT

Application Number

EP 15 15 7586

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X | EP 2 672 603 A1 (ABB TECHNOLOGY AG [CH]) 11 December 2013 (2013-12-11) * the whole document * | 1-3,8-15 | INV. H02J3/26 |
| X | WO 98/26489 A1 (TARGET HI TECH ELECTRONICS LTD [IL]; FRIEDMAN MARK M [IL]; DAVID YAIR) 18 June 1998 (1998-06-18) * abstract; figure 1 * * page 1, line 5 - page 8, line 4 * | 1,2, 12-15 | |
| X | US 2012/175951 A1 (PAMULAPARTHY BALA KRISHNA [IN] ET AL) 12 July 2012 (2012-07-12) * abstract; figures * * paragraphs [0015] - [0037] * | 1,2, 12-15 | |
| A | US 2012/078428 A1 (HENDERIECKX LUC [BE]) 29 March 2012 (2012-03-29) * abstract; figures * | 1,15 | |
| A | GB 2 449 651 A (ULTRA ELECTRONICS LTD [GB]) 3 December 2008 (2008-12-03) * abstract; figures 5-7 * | 1,15 | TECHNICAL FIELDS SEARCHED      (IPC) H02J |
| A | US 2012/235470 A1 (PRISSE LUCIEN [FR] ET AL) 20 September 2012 (2012-09-20) * abstract; figures * * paragraphs [0003] - [0025] * | 1,15 | |

The present search report has been drawn up for all claims

| Place of search | Date of completion of the search | Examiner |
|---|---|---|
| Munich | 7 August 2015 | Hartmann, Martin |

EPO FORM 1503 03.82 (P04C01)

## ANNEX TO THE EUROPEAN SEARCH REPORT
## ON EUROPEAN PATENT APPLICATION NO.

EP 15 15 7586

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2015

| Patent document cited in search report | | | Publication date | Patent family member(s) | | | Publication date |
|---|---|---|---|---|---|---|---|
| EP 2672603 | A1 | | 11-12-2013 | NONE | | | |
| WO 9826489 | A1 | | 18-06-1998 | AU | 737507 | B2 | 23-08-2001 |
| | | | | AU | 5464798 | A | 03-07-1998 |
| | | | | BR | 9715011 | A | 21-11-2000 |
| | | | | CA | 2273167 | A1 | 18-06-1998 |
| | | | | CN | 1240058 | A | 29-12-1999 |
| | | | | EP | 0956628 | A1 | 17-11-1999 |
| | | | | IL | 130085 | A | 12-09-2002 |
| | | | | JP | 2001506477 | A | 15-05-2001 |
| | | | | NO | 992544 | A | 27-07-1999 |
| | | | | NZ | 335928 | A | 22-12-2000 |
| | | | | PL | 334611 | A1 | 13-03-2000 |
| | | | | RO | 119575 | B1 | 30-12-2004 |
| | | | | RU | 2200364 | C2 | 10-03-2003 |
| | | | | TR | 9901957 | T2 | 22-05-2000 |
| | | | | UA | 66777 | C2 | 15-08-2000 |
| | | | | US | 6018203 | A | 25-01-2000 |
| | | | | WO | 9826489 | A1 | 18-06-1998 |
| | | | | YU | 25899 | A | 10-07-2001 |
| US 2012175951 | A1 | | 12-07-2012 | AU | 2012200100 | A1 | 26-07-2012 |
| | | | | CA | 2763421 | A1 | 10-07-2012 |
| | | | | EP | 2475059 | A1 | 11-07-2012 |
| | | | | JP | 2012147662 | A | 02-08-2012 |
| | | | | NZ | 597480 | A | 26-07-2013 |
| | | | | US | 2012175951 | A1 | 12-07-2012 |
| US 2012078428 | A1 | | 29-03-2012 | AU | 2010210067 | A1 | 08-09-2011 |
| | | | | CA | 2751520 | A1 | 12-08-2010 |
| | | | | CN | 102388519 | A | 21-03-2012 |
| | | | | EP | 2394348 | A2 | 14-12-2011 |
| | | | | JP | 2012517788 | A | 02-08-2012 |
| | | | | KR | 20120016041 | A | 22-02-2012 |
| | | | | NZ | 594664 | A | 21-12-2012 |
| | | | | RU | 2011136851 | A | 20-03-2013 |
| | | | | SG | 173121 | A1 | 29-08-2011 |
| | | | | US | 2012078428 | A1 | 29-03-2012 |
| | | | | WO | 2010089396 | A2 | 12-08-2010 |
| GB 2449651 | A | | 03-12-2008 | AT | 506727 | T | 15-05-2011 |
| | | | | EP | 2151033 | A2 | 10-02-2010 |
| | | | | GB | 2449651 | A | 03-12-2008 |
| | | | | US | 2010282910 | A1 | 11-11-2010 |
| | | | | WO | 2008145985 | A2 | 04-12-2008 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 15 15 7586

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2015

| Patent document cited in search report | Publication date | Patent family member(s) | Publication date |
|---|---|---|---|
| US 2012235470 A1 | 20-09-2012 | CA 2766488 A1<br>CN 102804539 A<br>EP 2449647 A1<br>FR 2947245 A1<br>US 2012235470 A1<br>WO 2011001079 A1 | 06-01-2011<br>28-11-2012<br>09-05-2012<br>31-12-2010<br>20-09-2012<br>06-01-2011 |

EPO FORM P0459

For more details about this annex : see Official Journal of the European Patent Office, No. 12/82